(19) **Europäisches Patentamt**

**European Patent Office**

**Office européen des brevets**

(11) **EP 0 783 802 B1**

(12) **EUROPEAN PATENT SPECIFICATION**

(45) Date of publication and mention
of the grant of the patent:
**23.04.2003   Bulletin 2003/17**

(21) Application number: **95933683.5**

(22) Date of filing: **11.09.1995**

(51) Int Cl.⁷: **H04B 7/005**, H04Q 7/38

(86) International application number:
**PCT/SE95/01022**

(87) International publication number:
**WO 96/010301 (04.04.1996 Gazette 1996/15)**

(54) **METHOD AND DEVICE CONCERNING FADING RELATED ACCESS CONTROL IN A DIGITAL RADIO SYSTEM**

VERFAHREN UND EINRICHTUNG ZUR ZUGANGSSTEUERUNG IM ZUSAMMENHANG MIT FADING IN EINEM DIGITALFUNKSYSTEM

PROCEDE ET DISPOSITIF PERMETTANT UNE COMMANDE D'ACCES EN FONCTION DE L'EVANOUISSEMENT DANS UN SYSTEME A FAISCEAU HERTZIEN NUMERIQUE

(84) Designated Contracting States:
**CH DE DK ES FR GB IT LI NL**

(30) Priority: **27.09.1994  SE 9403241**

(43) Date of publication of application:
**16.07.1997   Bulletin 1997/29**

(73) Proprietor: **TELIA AB**
**123 86 Farsta (SE)**

(72) Inventors:
• **WICKMAN, Johan**
**S-237 32 Bjärred (SE)**

• **ANDERSSON, Torbjörn**
**S-223 61 Lund (SE)**

(74) Representative: **Hopfgarten, Nils et al**
**L.A. Groth & Co. KB**
**P.O. Box 6107**
**102 32 Stockholm (SE)**

(56) References cited:
**EP-A- 0 532 485          WO-A-91/10296**
**US-A- 4 032 884          US-A- 4 901 319**
**US-A- 5 020 056**

**Description**

TECHNICAL FIELD

The present invention relates to a device and a method according to the preambles of claims 1 and 8. Thus the invention relates to a new method and device at a stationary or mobile radio communication system comprising devices for time shared channel access and which makes possible reduced influence of fading and time dispersion at transmission of radio signals between a transmitting and a receiving equipment in the mentioned system.

STATE OF THE TECHNOLOGY

In radio systems, preferably digital radio systems, it it previously known by among other things the document US,A, 5 020056 to reduce influence from synchronous fading in a digital radio system the transmission of which is based on TDMA-technology. The document relates to a method to reduce influence of existing fading with a certain periodicity by the time slot, which relates to a certain user, being moved around in a predefined way in one in the system included transfer frame. The system consequently does not take into account the momentary time period of the fading when measurements are not made on the transmitted signal.

Another document US,A,4 032 884 relates to a radio system for transmission of data where momentary measurements of the transmission quality of the connection link is performed. If the measurement indicates that unacceptable high fading exists, the transmission in the following time slots will be stopped by the receiving unit informing about this to the transmitting unit until the the receiving unit again informs that the transmission quality is acceptable.

Further it is previously known by the document US,A,4 901 319 to, at a radio commmunication system, calculate the fading characteristic for a channel regarding the time period of the fading, i.e. the time interval between signal strength dips of a predetermined depth.

By the presented documents it is consequently previously known, at a radio system, to have the possiblility to change frequency for a time slot if the transmission quality becomes too bad, alternatively to stop the transmission if the transmission signal quality is not acceptable. It is further known to use the dip frequency of the fading to influence the transmitted signal. What on the other hand is not previously known and which accordingly constitues a new method is that in a digital radio system have the possibility to change frequency for one or more time slots at predicted momentary fading dips which are calculated on the basis of a measured fading frequency of the transmitted signal.

DESCRIPTION OF THE INVENTION

TECHNICAL PROBLEM

Modern radio communication systems of to-day implies for a faultless signal transmission that the received signal has not been subject to any real disturbing moments during the transmission between the transmitting and the receiving equipment. Interference due to for instance fading is, however, a physical phenomenon which is difficult to cope with, so we will also henceforth concentrate ourselves on developing the technology which restricts the consequences of the fading.

Fading consists of variations in the strength of the received signal, in time or space, and is caused by among other things interference which occurs between different wave propagation paths, as for instance between direct and earth reflected signals, or between different signal paths in the atmosphere. The different wave propagation paths therefore displays different transit times between the transmitting and receiving equipment wich causes time dispersion.

A high time dispersion implies risk for a worse quality of the signal transmission and by that also an increased probability of interference. The invention aims at solving this problem.

A problem at the planning of a new radio communication system is that those in the radio communication system included transmitting and receiving equipments must be located within a comparatively restricted geographical area, otherwise the time dispersion would imply that the signal transmission quality would be too poor. If therefore the consequences of the fading could be restricted, the surface coverage of the system could be increased with maintained transmission quality. The invention also intends to solve this problem.

Time dispersion is often well correlated with fading which implies that a reduced influence of time dispersion would considerably improve the transmission quality in environments with extensive multipath propagation, as in for instance highly populated dwelling areas, city centres etc. The invention also intends to solve this problem.

In an embodiment of the subject of invention influences of the radio communication system are used, in which influences the traffic shall be possible to be directed over to a suitable channel in one for the system optimal and flexible way. The invention also intends to solve this problem.

THE SOLUTION

The above discusses problems are solved by an device and a method of the kind defined in the introductoring portion of the description and having the characterizing features of claims 1 and 8 respectively.

What can principally be regarded as significant for the invention is thus that it is based on an optimal channel selection, i. e. channel selection in the time plane, which is predicted on the basis of measured momentary fading for the stationary or mobile unit so the influence of fading is influenced in wished direction. One further characteristic is that the invention makes use of the fact that the fading for neighbouring points in time and space are correlated. Besides, the invention makes use of the fact that the fading for not correlated points are in the main uncorrelated which implies that the channel selection of different users will be uncorrelated, i.e. different users will not have any of the invention caused tendency to compete for the same channel in the time plane.

According to the invention idea the mobile unit or the base unit performs signal strength measurements by a measurement means on channels which are correlated with the carrier for which time shared access is to be performed. The signal strenght values are averaged over a short time, for instance 50 ms, whereafter the fading is calculated as the difference between signal strength value and average, i.e,

$$fading = signal\ strength - average$$

According to the invention the mobile unit or base unit also calculates the average period of the fading, i.e. the average for a fading cycle as for instance the distance between two minima, by a second averaging means.

According to an embodiment of the invention, in case of the fading following a predetermined distribution, as for instance Rayleigh-distribution, an average distance between at least two of said fading minimum value is equal to a half wavelength. The average period is then decided by knowlewdge of the speed of the mobile unit, which can be determined by means of for instance speedometer, doppler frequency or fading measurement. The margin of the fading, fmarg to wanted minimum values, min, are after that calculated as the difference between the fading and the decided minimum value according to the following:

$$fmarg = fading - min$$

Channel selection for the next packet transmission is after that decided in a way that the at the moment strongly fading influenced channel or channels are avoided, i.e. the channels which shows a negative fading margin. The decision is based on prediction of unsuitable channel.

The prediction is made on the basis of the fact that the measurements are considerably shorter than the average period, whereafter the momentary phase positions and start- respective end phase for the minimum value are calculated. Unsuitaable channel selection in relation to momentary phase position is then calculated according to the following:

$$Unsuitable\ channel = 360°n + (start\ phase,\ end\ phase),n$$

$$= 0,1,2,3...$$

In another embodiment of the invention when a definite momentary phase position cannot be decided, for instance if the fading decision can be made only once per average period, there are two alternative phase positions. Possible momentary phase positions and start- and end phase for the mimimim value are then calculated by means of fading and accepted fading distribution stored in a table. Unsuitable channel interval is then calculated according to the following:

$$\text{Unsuitable channel} = \begin{array}{l} 360°*n + (\text{start phase, end phase}) \\ 360°*n - \text{momentary phase} + \\ (\text{start phase, end phase}) \\ n = 0,1,2,3.... \end{array}$$

ADVANTAGES

Reduced influence from fading implies that a radio communication system can offer surface coverage with higher transmission quality and capacity to a lower cost than today's systems. A reduced influence of time dispersion also implies an increased transmission quality in environments with extensive multipath propagation.

The invention should also become of great importance as access technology for the 3rd generation's mobile radio communication systems, especially if they are developed for ATM-similar functionality, such as for instance "band width on demand". The invention can in such a connection be used for deciding optimal time interval in consultation with other service demands etc.

The invention can beside that also be implemented at existing radio systems which use access technologies based on channel division in the time plane, such as for instance DECT, DCS 1800 etc.

The present invention is a further development of existing technologies for dynamic channel allocation, which essentially are based on measurements of the average attenuation of the transmitted signal. The invention implies a considerable improvement because also momentary conditions are included at the channel allocation with the aim to reduce the negative influence of rapid fading.

DESCRIPTIONS OF FIGURES

One at present suggested embodiment of a device which shows the for the invention significant characteristics shall be described below while referring to the enclosed drawings where

Figure 1 shows the relation of the fading and the channel structure in the time plane at a certain speed. T expresses the average period of the fading, and

Figure 2 shows an example of table for decision of phase position for Rayleigh-distributed fading.

DETAILED EMBODIMENT

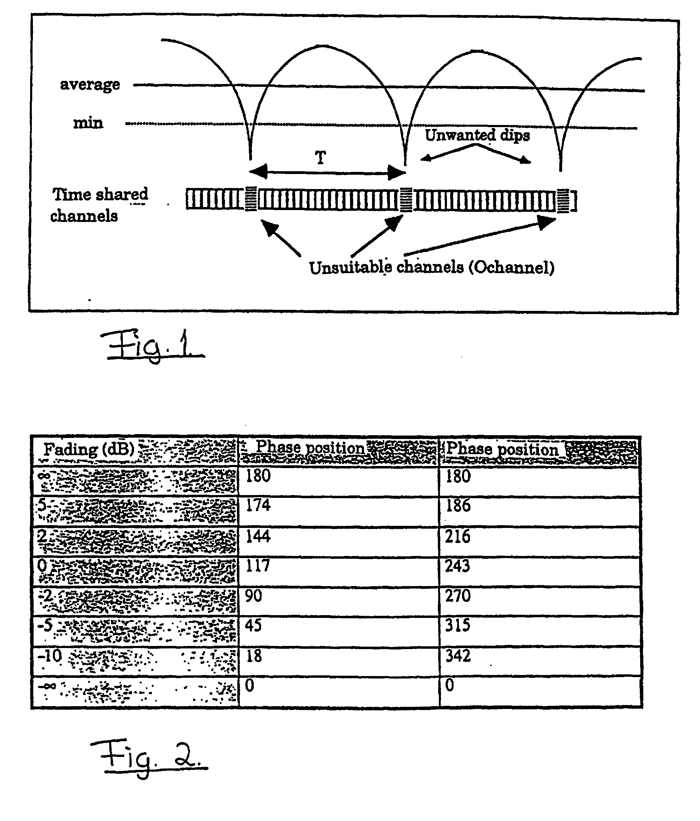

The invention is based on that optimal channel selection (selection of channel in the time plane) is predicted with starting point from measured and/or estimated "momentary" fading for the radio unit (stationary or mobile unit), so that influence from the fading is influenced in wanted direction. Normally this implies that one aims at mimizing the depth of the fading dips (see Figure 1). In certain cases it can also be desirable to minimize the fading maximum in order to reduce interference etc.

Often the fading is regarded to be random, i.e. one can not predict the fading in a certain point. This is however not quite correct. The invention thus makes use of the overlooked fact that the fading for closely located points in space and time are correlated. By closely located is meant tenths of a second, and a wavelenght's separation in space. The invention also makes use of the fact that the fading for not closely located points are on the whole uncorrelated. The latter fact implies that different users' selection of channels will be uncorrelated, i.e. different users will not have any by the invention caused tendency to compete for the same channel in the time plane.

The invention can be embodied as below:

Mobile- or base units perform signal strength measurements on channels which are correlated with the carrier for which time shared access shall be performed, The signal strength values are averaged over a "short" time, for instance 50 ms. The fading is calculated as the difference between signal strength value and average:

$$\text{fading} = \text{signal strength} - \text{average}$$

The mobile- or base unit calculates the average period (T) of the fading, i.e. the average time for a fading cycle (for instance the distance between two minima). Alternatively the unit assumes that the fading follows a predetermined distribution. This can for instance be Rayleigh-distribution, at which the average distance is a half wave-length. The average period (T) is in that case decided by knowledge of the mobile's speed, which for instance can be decided by means of a speedometer, measurement of the doppler frequency or fading measurement.

The marginal (fmarg) of the fading to wanted minimum values (min) shall be calculated:

$$fmarg = fading - min$$

Channel selection for the next transmission is decided in a way that an unsuitable channel is avoided, i.e. a channel with negative fmarg (see Figure 1). The decision is based on prediction of unsuitable channel.

The prediction of unsuitable channel is made according to two alternative methods:

One embodiment of the invention implies that the unit has performed measurements with interval considerably shorter than the average period (T). This implies that the unit can calculate momentary phase position, as well as start- and end phase for the minimum value. Unsuitable channel interval (Ochannel) in relation to momentary phase position can then be simply calculated as:

$$Ochannel = 360°n + (start\ phase,\ end\ phase),\ n=0,1,2,3..$$

The method demands for higher measurement capacity, calculation capacity and memory capacity in relation to the following method. On the other hand it is more robust and secures better knowledge of unsuitable channels in the time plane, and should be especially advantageous at true packet transmission.

The other embodiment of the invention is used when the unit can not decide a definite momentary phase position. For instance if the fading decision only can be made once per average period. In that case the unit has two alterntive phase positions, because it does not know whether the signal level is increasing or decreasing. Possible momentary phase positions as well as start- and end phase for the minimum value is calcualted by means of fading and accepted fading distribution in stored table, see Fig. 2. Unsuitable channel interval (Ochannel) can then be calculated for the other method:

$$Ochannel = \begin{cases} 360°*n + start\ phase,\ end\ phase] \\ 360°*n - momentary\ phase + [start\ phase,\ end\ phase] \end{cases}$$

$$for\ n = 0,1,2,3...$$

The prediction in most cases can be valid a number of periods (i.e. for n=2,3,..). The validity depends on speed, environment, band width etc.

The invention requires various degrees (depending on embodiment) of possibility to perform signal strenght measurements on channels which are correlated with the carrier for which time shared access is to be performed. In CDMA-system this is guaranteed due to the pilot channels which are necesssary for the controlling of the effect. On the whole demands for control of effect brings about a possible measurement channel which is fairly correlated.

In order to make the invention usable the system must allow a fairly free channel allocation in the time. systems with statistic channel allocation, which is avantageous from a capacity point of wiev, more than well meets the demands. Packet radio is on the whole well suitable. DECT is an existing system which meets the demands.

The invention is not restricted to the above, as an example shown embodiment, but can also be subject to modifications within the frame of the following claims.

**Claims**

1. A stationary or mobile digital radio communication system which makes use of dynamic channel allocation, **characterized in that** said system comprises wherein the influence of fading and time dispersion at transmission of signals between transmitting and receiving equipment in said system is reduced a measurement means which is allotted to a mobile or base unit of said digital radio communication system for measuring signal strength on channels which are correlated with the carrier for which time shared access is intended to be performed, a first averaging means for averaging said measured signal strength, a fading calculating means for calculating the fading as the difference between said measured signal strength and said average of the signal strength, said mobile or base unit includes a second averaging means for calculating an average period (T) of the fading from said measured signal strength, a fading margin calculating means for calculating the fading margin as the difference between the fading and a predetermined wanted fading minimum value (min) and **in that** a determining means is adapted to determine the momentary phase position of signal strength measurements and start and end phase for the minimum value to determine unsuitable channels selection (O-channel) from the location of said momentary phase positions in relation to said start and end phase .

2. System according to claim 1, **characterized in that** system said transmits information in time slots divided into time frames and **in that** selected time slots are arranged for transmitting said information to, respective from, said mobile or base unit of said communication system.

3. System according to any of the previous claims, **characterized in that** said system is provided with one or more additional mobile or base units for reception and transmission respectively of information, which are possible to call from, respectively to, said mobile or base unit.

4. System according to any of the previous claims, **characterized in that** said first averaging means is adapted to average said measured signal strength over a time period of milliseconds.

5. System according to any of the previous claims, **characterized in that** said second averaging means is adapted to calculate the average period (T) of the fading on the basis of the distance between at least two of said fading minimum values.

6. System according to any of the previous claims, **characterized in that** said determining means is adapted to determine the momentary phase position of the signal as well as start and end phase by using the fading and accepted fading distribution stored in a table.

7. Method to reduce influence of fading and time dispersion at transmission of signals between transmitting and a receiving equipment of a stationary or mobile digital radio communication system which makes use of dynamic channel allocation, **characterized in that** signal strength measurements are performed on channels which are correlated with the carrier for which time shared access is intended to be performed by a measurement means allotted to a mobile unit or a base unit of said digital radio communication system, **in that** the measured signal strength is averaged, **in that** the fading is calculated as the difference between the measured signal strength and the average signal strength, **in that** an average period (T) of the fading is calculated from the measured signal strength, **in that** a fading margin is calculated as the difference between the fading and a predetermined fading minimum value (min), and **in that** momentary hase positions of signal strength measurements and start- and end phase for the minimum value are determined and unsuitable channel selection (O-channel) is determined from the locations of said momentary phase positions of the signal strength measurements in relation to said start - and end phase.

8. Method according to claim 7, **characterized in that** in case of the fading following a predetermined distribution with an average distance between at least two of said fading minimum values equal to a half wavelength said average distance is calculated on the basis of knowledge of the speed of the mobile unit.

9. Method according to claim 7 or 8, **characterized in that** channel selection for the next, following transmission is decided on the basis of a negative fading margin of the channel.

**Patentansprüche**

1. Stationäres oder mobiles digitales Funkfernmeldesystem, das von dynamischer Kanalzuordnung Gebrauch macht, wobei der Einfluß von Schwund und Zeitdispersion beim Senden von Signalen zwischen sendender und empfangender Ausrüstung in dem System verringert wird, **dadurch gekennzeichnet, daß** das System Meßmittel, die einer Mobil- oder Basiseinheit des digitalen Funkfernmeldesystems zugeteilt sind, um Signalstärke auf Kanälen zu messen, die mit dem Träger korreliert sind, mit dem zeitlich gestaffelter Zugang durchgeführt werden soll, erste Mittelungsmittel zum Mitteln der gemessenen Signalstärke, Schwundberechnungsmittel zum Berechnen des Schwunds als dem Unterschied zwischen der gemessenen Signalstärke und dem Durchschnitt der Signalstärke, wobei die Mobil- oder Basiseinheit zweite Mittelungsmittel zum Berechnen einer durchschnittlichen Periode (T) des Schwunds von der gemessenen Signalstärke einschließt, Schwundspielraumberechnungsmittel zum Berechnen des Schwundspielraums als dem Unterschied zwischen dem Schwund und einem vorbestimmten gewünschten Schwundminimumwert (min) aufweist, und daß ein Bestimmungsmittel dazu ausgebildet sind, die momentane Phasenstellung der Signalstärkenmessung und Start- und Endphase für den Minimalwert zu bestimmen, um ungeeignete Kanalauswahl (O-Kanal) vom Ort der momentanen Phasenstellungen in Bezug auf die Start- und Endphase zu bestimmen.

2. System nach Anspruch 1, **dadurch gekennzeichnet, daß** das System Information in Zeitschlitzen überträgt, die in Zeitblöcke aufgeteilt sind, und daß ausgewählte Zeitschlitze zum Senden der Information zu bzw. von der Mobil- oder Basiseinheit des Fernmeldesystems angeordnet sind.

3. System nach einem der vorangehenden Ansprüche, **dadurch gekennzeichnet, daß** das System mit einer oder mehreren zusätzlichen Mobil- oder Basiseinheiten für Empfang und Senden von Information versehen ist, von denen oder zu denen Rufverbindung zu oder von der Mobil- oder Basiseinheit hergestellt werden kann.

4. System nach einem der vorangehenden Ansprüche, **dadurch gekennzeichnet, daß** die ersten Mittelungsmittel dazu ausgebildet sind, die gemessene Signalstärke über eine Zeitperiode von Millisekunden zu mitteln.

5. System nach einem der vorangehenden Ansprüche, **dadurch gekennzeichnet, daß** die zweiten Mittelungsmittel dazu ausgebildet sind, die durchschnittliche Periode (T) des Schwunds auf Basis der Entfernung zwischen wenigstens zwei der Schwundminimalwerte zu berechnen.

6. System nach einem der vorangehenden Ansprüche, **dadurch gekennzeichnet, daß** die Bestimmungsmittel dazu ausgebildet sind, die momentane Phasenposition des Signals als auch Start- und Endphase dadurch zu bestimmen, daß der Schwund und eine anerkannte Schwundverteilung verwendet wird, die in einer Tabelle gespeichert ist.

7. Verfahren zum Verringern des Einflusses von Schwund und Zeitdispersion beim Senden von Signalen zwischen Sendeund Empfangsausrüstung eines stationären oder mobilen Digitalfunkfernmeldesystems, das Gebrauch macht von dynamischer Ranalzuordnung, **dadurch gekennzeichnet, daß** Signalstärkemessungen auf Kanälen durchgeführt wird, die mit dem Träger korreliert sind, für den zeitlich gestaffelter Zugang durch Meßmittel durchgeführt werden soll, die einer Mobileinheit oder einer Basiseinheit des digitalen Funkfernmeldesystems zugeordnet sind, daß die gemessene Signalstärke gemittelt wird, daß der Schwund als der Unterschied zwischen der gemessenen Signalstärke und der durchschnittlichen Signalstärke berechnet wird, daß eine durchschnittliche Periode (T) des Schwunds von der gemessenen Signalstärke berechnet wird, daß ein Schwundspielraum als die Differenz zwischen dem Schwund und einem vorbestimmten Schwundminimalwert (min) berechnet wird, und daß momentane Phasenpositionen der Signalstärkemessungen und Start- und Endphase für den Minimalwert bestimmt werden und ungeeignete Kanalauswahl (O-Kanal) aus den Stellen der momentanen Phasenstellungen der Signalstärkenmessungen in Bezug auf die Start- und Endphase bestimmt wird.

8. Verfahren nach Anspruch 7, **dadurch gekennzeichnet, daß** im Falle des Schwunds, der einer vorbestimmten Verteilung mit einer durchschnittlichen Entfernung zwischen wenigstens zwei der Schwundminimalwerte folgt, die gleich einer halben Wellenlänge ist, die durchschnittliche Entfernung aufgrund der Kenntnis der Geschwindigkeit der Mobileinheit berechnet wird.

9. Verfahren nach Anspruch 7 oder 8, **dadurch gekennzeichnet, daß** über Kanalauswahl für die nächste folgende Übertragung aufgrund eines negativen Schwundspielraums des Kanals entschieden wird.

# EP 0 783 802 B1

**Revendications**

1. Système de communication radio numérique fixe ou mobile qui utilise une affectation dynamique de canal, dans lequel l'influence de l'évanouissement et de la dispersion de temps lors de la transmission de signaux entre des équipements d'émission et de réception dans le dit système est réduite, **caractérisé en ce que** le dit système comprend un moyen de mesure qui est affecté à un mobile ou à une unité de base du dit système de communication radio numérique pour mesurer l'intensité de signal sur des canaux qui sont en corrélation avec la porteuse pour laquelle il est prévu d'effectuer un accès en temps partagé, un premier moyen d'établissement de moyenne pour établir la moyenne de la dite intensité de signal mesurée, un moyen de calcul d'évanouissement pour calculer l'évanouissement comme étant la différence entre la dite intensité de signal mesurée et la dite moyenne de l'intensité de signal, le dit mobile ou la dite unité de base comprenant un deuxième moyen d'établissement de moyenne pour calculer une période moyenne (T) de l'évanouissement à partir de la dite intensité de signal mesurée, un moyen de calcul de marge d'évanouissement pour calculer la marge d'évanouissement comme étant la différence entre l'évanouissement et une valeur minimale d'évanouissement désirée prédéterminée (min), et un moyen de détermination est prévu pour déterminer la position de phase momentanée des mesures d'intensité de signal et la phase de début et de fin pour la valeur minimale afin de déterminer une sélection de canaux non appropriés (canal O) à partir de la localisation des dites positions de phase momentanées par rapport à la phase de début et de fin.

2. Système selon la revendication 1, **caractérisé en ce que** le dit système transmet des informations dans des tranches de temps divisées en blocs de temps , et **en ce que** des tranches de temps choisies sont prévues pour la transmission des dites informations au dit mobile ou à la dite unité de base du dit système de communication, et respectivement à partir de ceux-ci.

3. Système selon une quelconque des revendications précédentes, **caractérisé en ce que** le dit système comprend un ou plusieurs mobiles ou unités de base additionnels pour réception et émission respectivement d'informations qu'on peut appeler à partir du dit mobile ou de la dite unité de base, et respectivement vers ces derniers.

4. Système selon une quelconque des revendications précédentes, **caractérisé en ce que** le dit premier moyen d'établissement de moyenne est prévu pour établir la moyenne de la dite intensité de signal mesurée sur une période de l'ordre de millisecondes.

5. Système selon une quelconque des revendications précédentes, **caractérisé en ce que** le dit deuxième moyen d'établissement de moyenne est prévu pour calculer la période moyenne (T) de l'évanouissement sur la base de la distance entre au moins deux des dites valeurs minimales d'évanouissement.

6. Système selon une quelconque des revendications précédentes, **caractérisé en ce que** le dit moyen de détermination est prévu pour déterminer la position de phase momentanée du signal ainsi que la phase de début et de fin, par utilisation de l'évanouissement et de la distribution d'évanouissement acceptée stockée dans une table.

7. Procédé de réduction de l'influence de l'évanouissement et de la dispersion de temps dans la transmission de signaux entre un équipement émetteur et un équipement récepteur d'un système de communication radio numérique fixe ou mobile qui utilise une affectation dynamique de canaux, **caractérisé en ce que** des mesures d'intensité de signal sont effectuées sur des canaux qui sont en corrélation avec la porteuse pour laquelle on veut effectuer un accès en temps partagé, par un moyen de mesure affecté à une unité mobile ou une unité de base du dit signal de communication radio numérique, **en ce qu'**on établit la moyenne de l'intensité de signal mesurée, **en ce qu'**on calcule l'évanouissement comme étant la différence entre l'intensité de signal mesurée et l'intensité de signal moyenne, **en ce qu'**on calcule une période moyenne T de l'évanouissement à partir de l'intensité de signal mesurée, **en ce qu'**on calcule une marge d'évanouissement comme étant la différence entre l'évanouissement et une valeur minimale d'évanouissement prédéterminée (min), et **en ce qu'**on détermine les positions de phase momentanées des mesures d'intensité de signal et la phase de début et de fin pour la valeur minimale, et on détermine une sélection de canaux non appropriés (canal O) à partir des localisations des dites positions de client momentanées des mesures d'intensité de signal par rapport à la dite phase de début et de fin.

8. Procédé selon la revendication 7, **caractérisé en ce que**, dans le cas où l'évanouissement suit une distribution prédéterminée avec une distance moyenne entre au moins deux des dites valeurs minimales d'évanouissement égale à une demi-longueur d'onde, on calcule la dite distance moyenne sur la base de la connaissance de la vitesse de l'unité mobile.

8

9. Procédé selon la revendication 7 ou 8, **caractérisé en ce que** la sélection de canal pour la transmission suivante est décidée sur la base d'une marge d'évanouissement négative du canal.

Fig. 1

| Fading (dB) | Phase position | Phase position |
|---|---|---|
| ∞ | 180 | 180 |
| 5 | 174 | 186 |
| 2 | 144 | 216 |
| 0 | 117 | 243 |
| -2 | 90 | 270 |
| -5 | 45 | 315 |
| -10 | 18 | 342 |
| -∞ | 0 | 0 |

Fig. 2.